# EUROPEAN PATENT APPLICATION

(11) **EP 4 822 307 A1**
(43) Date of publication of application: **14.10.2026**
(21) Application number: 24900269.2
(22) Date of filing: 02.10.2024
(51) Int. Cl.: G01F 23/284, G08C 15/00, G08C 17/00

(54) **SENSOR DEVICE SYSTEM**

(30) Priority: 06.12.2023 JP 2023206200
(71) Applicant: HOSIDEN CORPORATION, Yao-shi, Osaka 581-0071 (JP)
(72) Inventor: ISODA Takeshi, Yao-shi, Osaka 581-0071 (JP); TOYOTA Naoki, Yao-shi, Osaka 581-0071 (JP)
(74) Representative: LBP Lemcke, Brommer & Partner Patentanwälte mbB
(86) International application number: PCT/JP2024/035191
(87) International publication number: WO 2025/120972

(57) **Abstract**

A sensor device system includes: a sensor unit; a first communication device (91) configured to transmit output information output from the sensor unit or result information based on the output information, and communicating in accordance with a first communication standard; a second communication device (92) configured to communicate in accordance with a second communication standard different from the first communication standard; and a control unit (5) configured to control operations of the sensor unit, the first communication device (91), and the second communication device (92). The second communication device (92) is configured to receive control data for the control unit (5).

## Description

### Technical Field

The present disclosure relates to a sensor device system.

### Background Art

Patent Literature 1 discloses a stock amount notification system for managing the remaining amount of kerosene stored in households or the like. The stock amount notification system disclosed in Patent Literature 1 includes: a stock amount detection means such as a pressure sensor; a transmitting terminal that transmits data on the remaining amount of kerosene detected by the stock amount detection means via a wireless means or similar means; a receiving terminal that receives the data on the remaining amount of kerosene transmitted from the transmitting terminal; and a stock amount management device that performs operations such as storing the data on the remaining amount received by the receiving terminal and giving a notification of the remaining amount of kerosene.

### Citation List

### Patent Literature

Patent Literature 1: JP 2012-86941A

### Summary of Invention

### Technical Problem

In the technology disclosed in Patent Literature 1, for example, if control data needs to be transmitted to a sensor (in Patent Literature 1, the stock amount detection means) or the like for maintenance, etc. of the sensor or the like, the control data will be transmitted to the transmitting terminal for transmitting the remaining amount data to an external device. In other words, the sensor or the like will use a single communication device to transmit the remaining amount data and receive the control data, causing a risk that adverse effects such as communication delays may occur.

Therefore, there is a demand for a sensor device system configured to be able to communicate using different communication devices depending on the usage of data.

### Solution to Problem

The characteristic configuration of a sensor device system according to the present disclosure is directed to a sensor device system including: a sensor unit; a first communication device configured to transmit output information output from the sensor unit or result information based on the output information, and communicate in accordance with a first communication standard; a second communication device configured to communicate in accordance with a second communication standard different from the first communication standard; and a control unit configured to control operations of the sensor unit, the first communication device, and the second communication device, wherein the second communication device is configured to receive control data for the control unit.

With this characteristic configuration, data communication can be carried out by selecting a communication device according to the usage of data to be communicated (communication purpose).

In addition, preferably, the first communication device communicates using a communication standard enabling a long-range wireless communication as the first communication standard.

With this characteristic configuration, the output information from the sensor unit can be remotely monitored.

In addition, preferably, the second communication device communicates using a communication standard enabling a short-range wireless communication as the second communication standard.

With this characteristic configuration, for example, an operator can visually check, from among multiple devices, the device that is to be subjected to maintenance (device to which control data is to be communicated) (while, for example, checking operation thereof), and perform maintenance work and the like thereon.

In addition, preferably, the sensor unit measures a distance to content contained in a container by measuring time until transmitted radio waves are reflected on the content and are received, and outputs the measured distance as the result information.

With this configuration, a general-purpose sensor (ToF type level sensor) can be used to configure the sensor unit.

In addition, preferably, the sensor unit transmits millimeter wave sensor as the radio waves.

With this configuration, the sensor unit uses millimeter waves that are different from the frequency bands used for communications of the first communication device and the second communication device, and can therefore suppress the effects of interference and the like with the communications of the first communication device and the second communication device.

In addition, preferably, the sensor unit includes a magnetic sensor configured to detect a change in magnetic field and sense a state of a measurement target material.

With this configuration, a general-purpose magnetic sensor can be used to form the sensor unit, and the sensor device system can be provided as a current sensor device, an instrument metering sensor device, or the like.

In addition, preferably, the sensor device system includes: a calculation unit configured to calculate the result information based on the output information.

With this configuration, the result information calculated based on the output information can be output.

In addition, preferably, the sensor device system further includes: a power supply unit configured to supply power to the sensor unit, the calculation unit, the control unit, the first communication device, and the second communication device; and a casing including a housing space in which the sensor unit, the calculation unit, the control unit, the first communication device, the second communication device, and the power supply unit are housed, wherein the housing space is watertight.

With this configuration, the sensor device system can be used at places such as outdoor places where water resistance is required.

In addition, preferably, the sensor device system further includes: a first external device configured to receive the output information or the result information via the first communication device.

With this configuration, the output information or the result information can be transmitted to the first external device.

In addition, preferably, the sensor unit is configured to output estimation source information required to estimate a remaining amount of content contained in a container.

With this configuration, the estimated results of the remaining amount of the content contained in the container can be transmitted as the output information or result information.

### Brief Description of Drawings

FIG. 1 is a diagram schematically showing a remaining amount estimation system according to an embodiment.
FIG. 2 is a perspective view showing configurations of a container and a remaining amount estimation device according to the embodiment.
FIG. 3 is a cross-sectional view of the container shown in FIG. 2 with the remaining amount estimation device attached.
FIG. 4 is an exploded perspective view of the remaining amount estimation device shown in FIG. 2.
FIG. 5 is an exploded perspective view of the remaining amount estimation device shown in FIG. 2.
FIG. 6A is a diagram showing an example of measurement result information according to the embodiment.
FIG. 6B is a diagram showing an example of the measurement result information according to the embodiment.
FIG. 6C is a diagram showing an example of the measurement result information according to the embodiment.
FIG. 7 is a graph showing an example of the relationship between the depth of content and the remaining amount according to the embodiment.
FIG. 8 is a diagram schematically showing a remaining amount estimation system according to another embodiment.

### Description of Embodiments

The following will describe a sensor device system including a sensor device according to an embodiment of the present disclosure, taking a remaining amount estimation system (an example of the sensor device system) including a remaining amount estimation device (an example of the sensor device) as an example. Note that the constituent components of embodiments described below can be combined with each other as long as they are not contradictory with each other. In addition, the materials, shapes, dimensions, quantities, arrangements, and the like of the constituent components in the aspects of the embodiments described below are examples, and may be appropriately modified and designed as long as it can achieve similar functions.

### [Remaining Amount Estimation System]

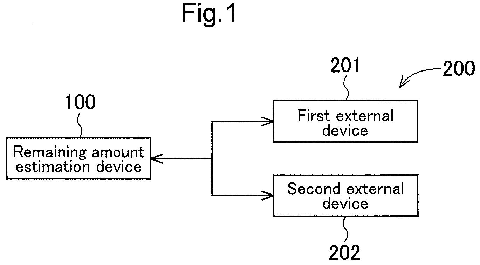

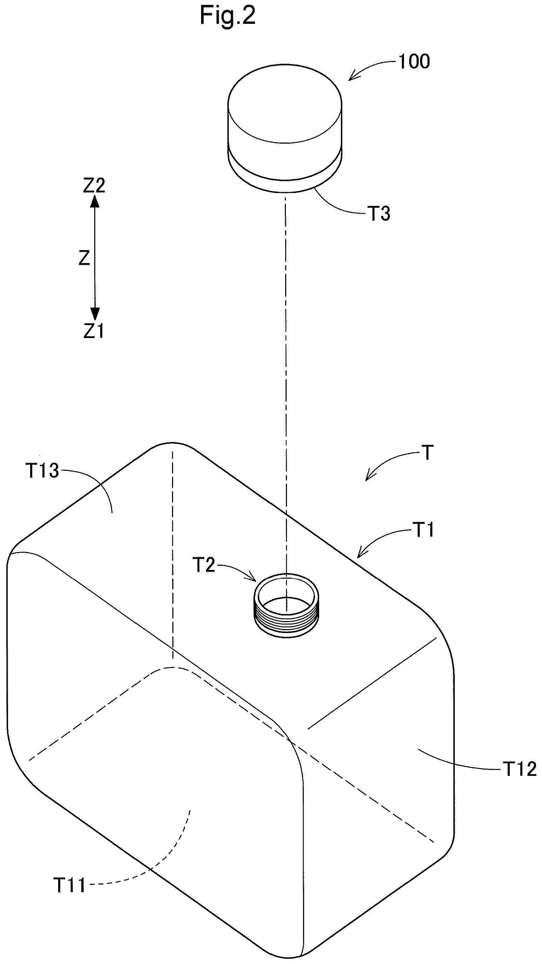

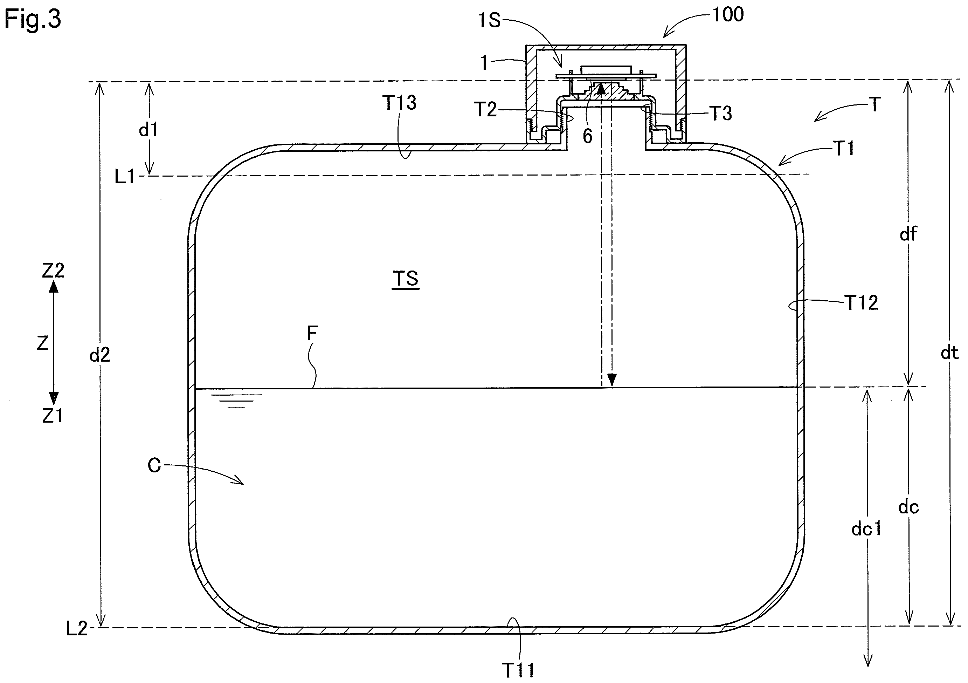

A schematic configuration of a remaining amount estimation system 200 including a remaining amount estimation device 100 will be described with reference to FIGS. 1 to 3. FIG. 1 is a diagram showing an overview configuration of the remaining amount estimation system 200. FIG. 2 is a perspective view showing configurations of a container T and the remaining amount estimation device 100, and FIG. 3 is a cross-sectional view of the container T shown in FIG. 2 with the remaining amount estimation device 100 attached.

As shown in FIG. 1, the remaining amount estimation system 200 includes, in addition to the remaining amount estimation device 100 for estimating a remaining amount Ra of content C (see FIG. 3) contained in the container T (see FIG. 2), a first external device 201 and a second external device 202, which are configured to be able to communicate with the remaining amount estimation device 100. Note that the content C is an example of the measurement target material, and the remaining amount Ra of the content C is an example of the state of the measurement target material.

### [First External Device]

The first external device 201 is, for example, a monitoring device for monitoring the remaining amount Ra of the content C. The first external device 201 is capable of communicating with the remaining amount estimation device 100 in accordance with a long-range wireless standard (an example of a first communication standard) that corresponds to a first communication distance (1 km or more in the present embodiment). In the present embodiment, the first external device 201 is a server present on a network such as a cloud server provided by a communication service provider, and is configured to be able to communicate with the remaining amount estimation device 100 via a base station.

### [Second External Device]

The second external device 202 is, for example, a maintenance management device for performing maintenance on the remaining amount estimation device 100. The second external device 202 can communicate with the remaining amount estimation device 100 in accordance with a short-range wireless standard (an example of a second communication standard different from the first communication standard) that corresponds to a second communication distance (up to 300 m in the present embodiment). In the present embodiment, the second external device 202 is an information processing terminal such as a mobile phone or smartphone, and is configured to be able to communicate with the remaining amount estimation device 100 at a distance (range) at (in) which the remaining amount estimation device 100 can be viewed.

### [Container]

As shown in FIGS. 2 and 3, the container T has a container body T1, a cylindrical opening T2 that protrudes from the container body T1, and a lid T3 that closes the opening T2. In the present embodiment, the container T is a kerosene tank, and the content C is kerosene.

The container body T1 includes a bottom face T11, a side face T12, and an upper face T13, and a storage space TS (see FIG. 3) for containing (storing) the content C is formed by the bottom face T11, the side face T12, and the upper face T13. The opening T2 connects the storage space TS to the outside of the container T. The opening T2 is formed in the upper face T13 of the container body T1 that is opposite to the bottom face T11, and protrudes from the upper face T13 in a direction away from the bottom face T11 (direction orthogonal to the upper face T13). The opening T2, for example, has a bore diameter (inner diameter) of 50 mm or more and 65 mm or less, and has an area smaller than that of the upper face T13 when viewed in the direction orthogonal to the upper face T13. Note that, for example, the upper face T13 has an area of 5000 mm² or more and 7000 mm² or less.

The content C is fed to the storage space TS via the opening T2 and contained in the storage space TS (stored in the storage space TS). The opening T2 has a configuration where the lid T3 is attachable thereto, and the opening T2 is closed by attaching the lid T3. The lid T3 contains a resin as a material, and the remaining amount estimation device 100 is attached to the lid T3. In other words, the remaining amount estimation device 100 is placed opposing the bottom face T11 of the container body T1.

Note that in the following, when the lid T3 to which the remaining amount estimation device 100 is attached is attached to the opening T2, the direction from the remaining amount estimation device 100 toward the bottom face T11 of the container body T1 is referred to as a "vertical direction Z", and the side in the vertical direction Z on which the bottom face T11 is located is referred to as a "lower side Z1", while the other side (side where remaining amount estimation device 100 is located) is referred to as an "upper side Z2".

### [Remaining Amount Estimation Device]

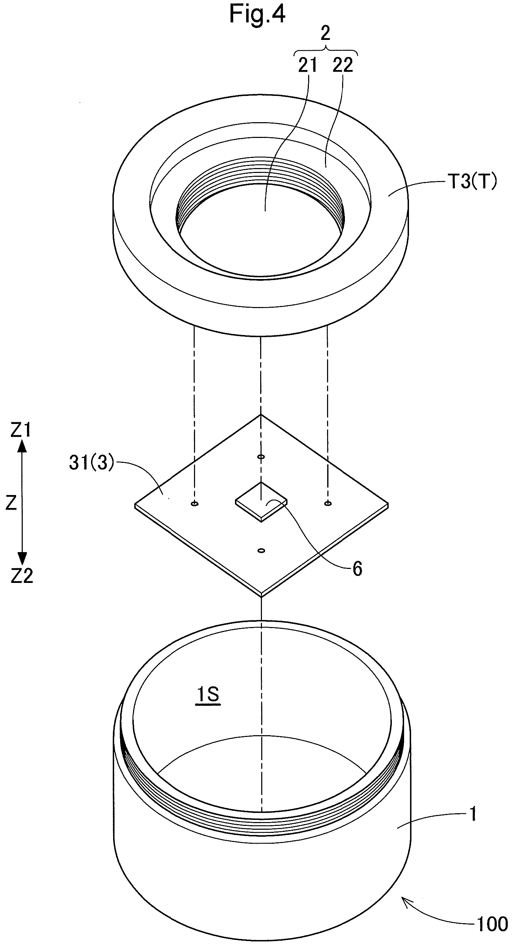

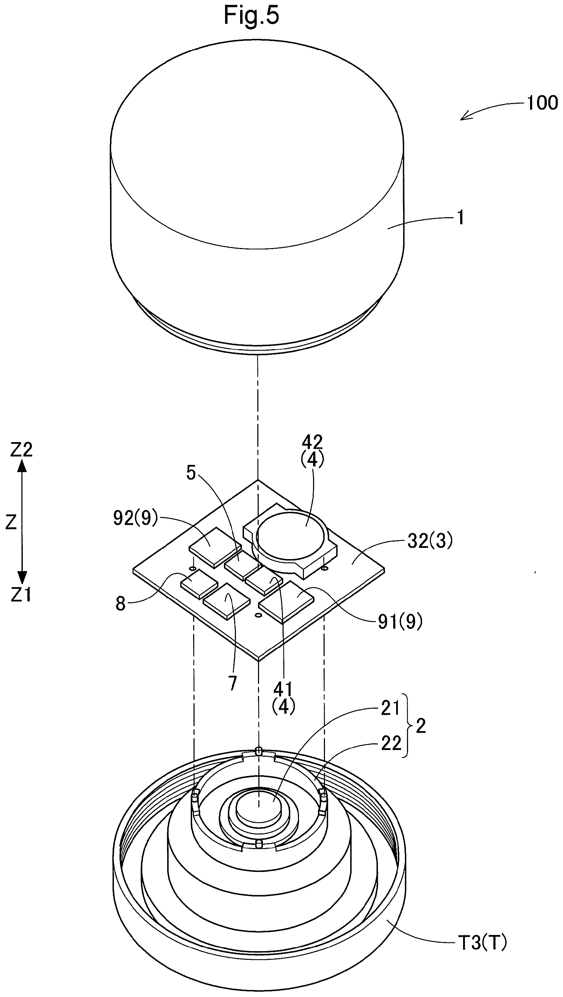

The remaining amount estimation device 100 estimates the remaining amount Ra of the content C contained in the container T. FIGS. 4 and 5 are exploded perspective views of the remaining amount estimation device 100.

As shown in FIGS. 4 and 5, the remaining amount estimation device 100 includes a casing 1, a lens unit 2, a substrate 3, a power supply unit 4 (see FIG. 5), a control unit 5 (see FIG. 5), a sensor unit 6 (see FIG. 4), a storage unit 7 (see FIG. 5), a remaining amount estimation unit 8 (see FIG. 5), and a communication unit 9 (see FIG. 5). Note that the remaining amount estimation unit 8 is an example of a calculation unit.

### [Casing]

The casing 1 is insulating and contains a resin as a material. As shown in FIG. 3, the casing 1 is placed to cover the lid T3 of the container T and is held on the lid T3. The casing 1 forms, together with the lid T3, a housing space 1S (see FIG. 4) for housing the lens unit 2, the substrate 3, the power supply unit 4, the control unit 5, the sensor unit 6, the storage unit 7, the remaining amount estimation unit 8, and the communication unit 9. In the present embodiment, the housing space 1S is configured to be watertight. For example, by applying a sealing material such as adhesive or grease to a gap between the lid T3 and the casing 1, the housing space 1S is made watertight.

### [Lens Unit]

The lens unit 2 shown in FIGS. 4 and 5 increases the sensitivity of the sensor unit 6. The lens unit 2 includes a lens 21 (convex lens) and a lens holder 22 that holds the lens 21. The lens 21 is a plastic lens made of a resin and is held by the lens holder 22 in such a manner as to face the sensor unit 6 in an orientation where the container T side of the lens 21 protrudes. In the present embodiment, the lens holder 22 is formed as a separate component from the lid T3, and is supported by the lid T3 of the container T. Note that the lens holder 22 may be formed in one piece with the lid T3.

### [Substrate]

On the substrate 3, the power supply unit 4, the control unit 5, the sensor unit 6, the storage unit 7, the remaining amount estimation unit 8, and the communication unit 9 are mounted. In the present embodiment, the sensor unit 6 is arranged on one side of the substrate 3, namely, a first surface 31 (see FIG. 4), and the power supply unit 4, the control unit 5, the storage unit 7, the remaining amount estimation unit 8, and the communication unit 9 are arranged on the other side of the substrate 3, namely, a second surface 32 (see FIG. 5). The substrate 3 is housed in the casing 1 with the side (first surface 31) on which the sensor unit 6 is arranged located on the lower side Z1, and is attached to the lid T3 (see FIG. 3).

### [Power Supply Unit]

The power supply unit 4 supplies power to the components of the remaining amount estimation device 100. The power supply unit 4 includes a power supply circuit 41 and a battery unit 42. The power supply circuit 41 converts power from the battery unit 42 (performs DC-AC conversion and/or voltage conversion) and supplies the converted power to the components (the control unit 5, the sensor unit 6, the storage unit 7, the remaining amount estimation unit 8, and the communication unit 9) of the remaining amount estimation device 100. In the present embodiment, the battery unit 42 is a built-in primary battery, but the battery unit 42 may be a secondary battery, or a combination of a self-powered device and a secondary battery.

### [Control Unit]

The control unit 5 can control the operation of the components of the remaining amount estimation device 100. The control unit 5 is capable of performing power supply control on the power supply unit 4 and communication control on the communication unit 9. The control unit 5 can also update firmware of devices such as the sensor unit 6 and the communication unit 9. Note that the control unit 5 is constituted by a microcontroller or the like equipped with a processor.

### [Sensor Unit]

The sensor unit 6 outputs estimation source information C1 (an example of output information) for use in estimation of the remaining amount Ra of the content C contained in the container T. In the present embodiment, the sensor unit 6 is a distance sensor (millimeter-wave sensor for distance measurement) that measures the distance to a measurement target using radio waves (millimeter waves). As shown in FIG. 3, the sensor unit 6 measures the time it takes for radio waves transmitted from a transmitting part of the sensor unit 6 to be reflected on a reflective surface and received by a receiving part (light receiving element) of the sensor unit 6. In other words, the sensor unit 6 is a Time of Flight (ToF) type level sensor, and is capable of measuring the distance to the content C in a manner of non-contact with the content C. Note that the transmission and reception efficiency of radio waves in the sensor unit 6 is improved by the passage of the radio waves through the lens 21 of the lens unit 2.

The reflective surface includes a boundary surface F of the content C (the liquid level of the kerosene in the present embodiment), the bottom face T11 of the container T, walls constituting the opening T2 of the container T, and the like. In the present embodiment, the relative permittivity εr of the content C is "2" and is greater than the relative permittivity εr of air of "1 (approximately 1)". In other words, the relative permittivity εr changes from the boundary surface F of the content C. Note that it is preferable that the gas (air) present between the sensor unit 6 and the boundary surface F does not contain water vapor.

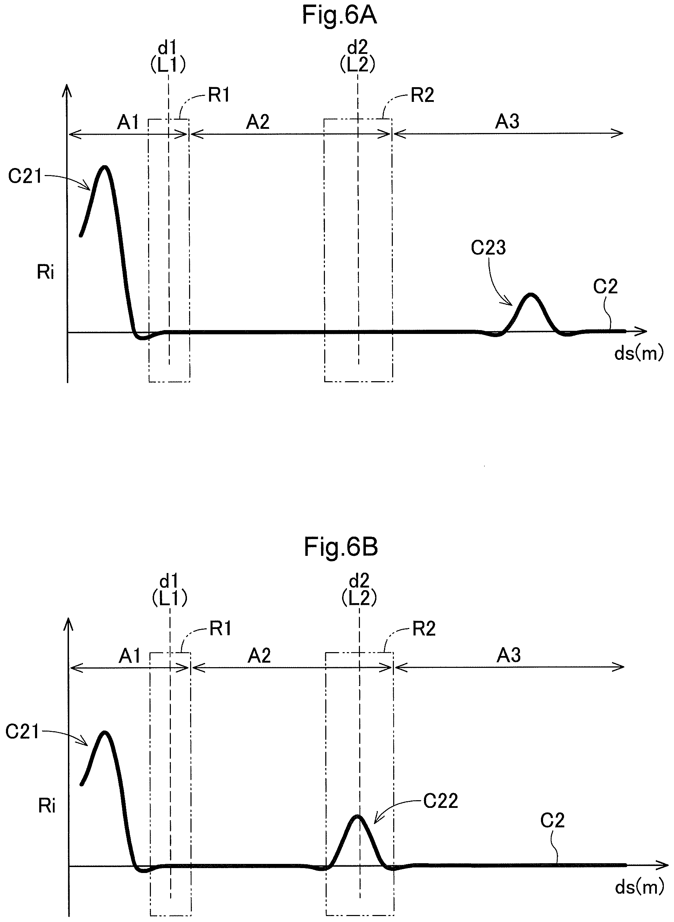

The sensor unit 6 outputs measurement result information C2 (see FIGS. 6A to 6C) indicating the distance to the measurement target based on the measured time.

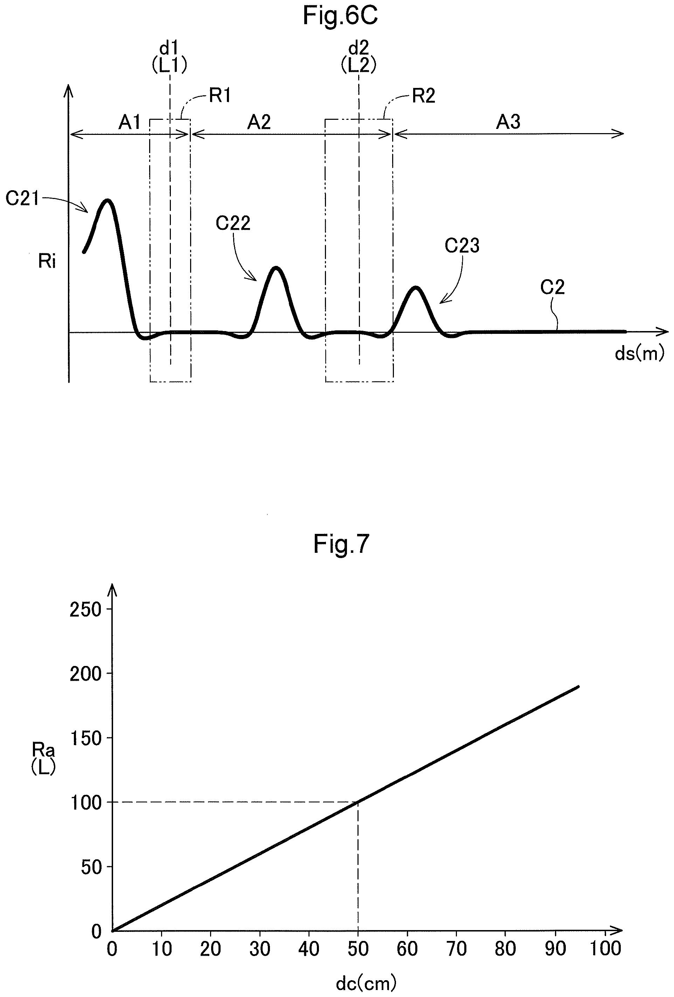

FIGS. 6A to 6C show examples of the measurement result information C2 output from the sensor unit 6. In FIGS. 6A to 6C, the vertical axis indicates a reflection intensity Ri of radio waves transmitted from the sensor unit 6, and the horizontal axis indicates a measured distance ds between the sensor unit 6 and the reflective surface. FIG. 6A shows an example of the measurement result information C2 output from the sensor unit 6 when the remaining amount Ra of the content C is estimated to be the full amount. FIG. 6B shows an example of the measurement result information C2 output from the sensor unit 6 when the remaining amount Ra of the content C is estimated to be zero (the container is estimated to be empty). FIG. 6C shows an example of the measurement result information C2 output from the sensor unit 6 when the remaining amount Ra of the content C is estimated to be a specific amount that is neither the full amount nor zero. Note that the full amount corresponds to, for example, the remaining amount Ra of the content C when the amount of the content C stored in the storage space TS is equal to the maximum storage capacity (hereinafter referred to as a "storable capacity") of the container T. Zero (empty) corresponds to, for example, the remaining amount Ra of the content C when the amount of the content C stored in the storage space TS is "0". However, the amount of the content C when it is estimated to be the full amount, and the amount of the content C when it is estimated to be zero can be adjusted by an administrator of the remaining amount estimation device 100, or the like, and a tolerance range described below can also be provided. Note that it is preferable to set the full amount of the content C so that, when the content C has the remaining amount Ra that is equal to the storable capacity, a region of air to the extent of about a few centimeters is formed between the lid T3 and the content C.

As shown in FIGS. 6A to 6C, in the present embodiment, two thresholds (first threshold d1 and second threshold d2) are set for the measured distance ds (the distance between the sensor unit 6 and the reflective surface on which the radio waves are reflected) indicated by the measurement result information C2 output by the sensor unit 6.

### [First Threshold]

The first threshold d1 is a threshold preset according to the specification of the sensor unit 6 and/or the specification of the container T. In detail, the first threshold d1 is preset by the administrator or the like based on the sensitivity characteristics of the sensor unit 6 (distance from the sensor unit 6 from which the distance measurement of the sensor unit 6 becomes unstable), the shape of the container T (for example, the shape of the opening T2), the size of the container T (for example, the size of the opening T2), and the like. In the present embodiment, the distance between a first division line L1 shown in FIG. 3 and the sensor unit 6 is set as the first threshold d1, taking into account the sensitivity characteristics of the sensor unit 6 (whether or not it is the distance at which the sensor unit 6 can output an accurate value).

As the first division line L1, for example, a boundary between a region containing the measured distance ds output by the sensor unit 6 that has received radio waves reflected on the walls constituting the opening T2 (other than the boundary surface F and the bottom face T11) serving as the reflective surface, and a region containing the measured distance ds output by the sensor unit 6 that has received radio waves reflected on the boundary surface F or the bottom face T11, other than the walls constituting the opening T2, serving as the reflective surface is set taking into account the sensitivity characteristics of the sensor unit 6. In the present embodiment, the boundary surface F (liquid level) of the content C when the remaining amount Ra of the content C is estimated to be the full amount (considered to be the full amount) is set as the first division line L1 taking into account the sensitivity characteristics of the sensor unit 6, and in the example shown in FIG. 3, the first division line L1 is set at a position away from the lower end of the opening T2 by a preset distance. However, the first division line L1 may be set at the lower end of the opening T2.

### [Second Threshold]

The second threshold d2 is preset based on the distance (actual distance) between a second division line L2 and the sensor unit 6. In the present embodiment, the bottom face T11 of the container T is preset as the second division line L2 by the administrator or the like. In other words, the second threshold d2 is set to a value that is equal to the value indicating the actual distance (hereinafter referred to as a "bottom face distance dt") between the sensor unit 6 and the bottom face T11.

### [Tolerance Range]

In the present embodiment, tolerance ranges (a first tolerance range R1 and a second tolerance range R2) are respectively set for the first division line L1 and the second division line L2.

The first tolerance range R1 and the second tolerance range R2 are respectively set for the first division line L1 and the second division line L2 in such a manner that they cross the respective first and second division lines L1 and L2, for example. In detail, the first tolerance range R1 and the second tolerance range R2 have set values (corresponding to several centimeters to several tens of centimeters) that include a range on the upper side Z2 (sensor unit 6 side) and a range on the lower side Z1 (bottom face T11 side) of the respective first and second division lines L1 and L2. The values set as the first tolerance range R1 and the second tolerance range R2 are determined in advance by the administrator or the like.

By setting the first tolerance range R1 and the second tolerance range R2, it is possible to cover individual differences such as the characteristics of the sensor unit 6 (sensor IC), allowing for a wider range of estimation of the remaining amount Ra. For example, by setting the first tolerance range R1, it is possible to cope with the variation in the sensitivity characteristics of the sensor unit 6. In addition, for example, by setting the second tolerance range R2, it is possible to estimate the remaining amount Ra of the content C is zero (to consider that the container T is empty) if the remaining amount Ra of the content C is extremely small.

Note that, when the actual remaining amount Ra of the content C is the full amount, the second tolerance range R2 includes set values that are exceeded by the measured distance ds indicated by the measurement result information C2 output from the sensor unit 6 (values in which later-described third measurement result information C23 is included in the measurement result information C2).

Note that in the following, as shown in FIGS. 6A to 6C, a "first area A1" is an area extending up to the upper limit of the first tolerance range R1, a "second area A2" is an area starting after the upper limit of the first tolerance range R1 and extending up to the upper limit of the second tolerance range R2, and a "third area A3" is an area starting after the upper limit of the second tolerance range R2. In addition, among the measurement result information C2 output from the sensor unit 6, a portion of the measurement result information C2 that is contained in the first area A1 is referred to as "first measurement result information C21", a portion of the measurement result information C2 that is contained in the second area A2 is referred to as "second measurement result information C22", and a portion of the measurement result information C2 that is contained in the third area A3 is referred to as "third measurement result information C23".

The sensor unit 6 outputs the measurement result information C2 that includes at least one type of the first measurement result information C21, the second measurement result information C22, and the third measurement result information C23. The first measurement result information C21 can be output by the sensor unit 6 when it has received radio waves reflected using the walls constituting the opening T2 as a reflective surface, for example. In other words, the measured distance ds indicated by the first measurement result information C21 appearing in the first area A1 does not need to indicate the accurate value as the distance between the sensor unit 6 and the content C, and is not suitable for estimating the remaining amount Ra of the content C. Therefore, the measured distance ds indicated by the first measurement result information C21 (measured distance ds included in the first area A1) is not used to estimate the remaining amount Ra of the content C. This prevents the deterioration in accuracy of the sensor unit 6.

The second measurement result information C22 can be output by the sensor unit 6 when it has received radio waves reflected using the boundary surface F (liquid level) or the bottom face T11 of the container T as a reflective surface, for example. In other words, the second measurement result information C22 appearing in the second area A2 indicates the distance between the sensor unit 6 and the content C or the bottom face T11, and is suitable for estimating the remaining amount Ra of the content C. Therefore, the measured distance ds indicated by the second measurement result information C22 (measured distance ds included in the second area A2) is used for the remaining amount Ra of the content C.

The third measurement result information C23 is the measurement result information C2 output when the propagation speed of radio waves changes (the ranging amount changes) due to the content C remaining. In detail, if the content C with a relative permittivity εr greater than that of air remains in the container T, the third measurement result information C23 can be output by the sensor unit 6 when it has received radio waves reflected using the bottom face T11 of the container T as a reflective surface.

For example, when radio waves are propagated when the container T has the full amount of content C, the radio waves are propagated only through the content C (without passing through air). In contrast, when radio waves are propagated when the content C is in a "0" state (empty state), the radio waves are propagated only through air (without passing through the content C). As described above, the relative permittivity εr of the content C of "2" is greater than the relative permittivity εr of air of "1". Therefore, the measured distance ds (apparent distance) to the bottom face T11 of the container T indicated by the measurement result information C2 output from the sensor unit 6 is greater than the bottom face distance dt, which is the actual distance, and a value exceeding the second threshold d2 (i.e., the third measurement result information C23) is output.

In detail, the bottom face distance dt between the sensor unit 6 and the bottom face T11 is theoretically obtained by the sum of the distance from the sensor unit 6 to the boundary surface F of the content C and a depth dc of the content C. However, if, as described above, the content C with a relative permittivity εr greater than "1" remains, the measured distance ds indicated by the measurement result information C2 output from the sensor unit 6 indicates a value greater than the actual bottom face distance dt. In other words, a depth dc1 (measured distance ds) of the content C obtained based on the measurement result information C2 output from the sensor unit 6 has a value greater than the actual depth dc of the content C. It is conceivable that there is one piece of second measurement result information C22 unless the content C is a mixture of multiple media with different relative permittivities εr. Therefore, the third measurement result information C23, which indicates a distance (value) greater than the second measurement result information C22, is considered to indicate the distance between the sensor unit 6 and the reflective surface (bottom face T11) when the bottom face T11 is used as the reflective surface. In other words, the measured distance ds indicated by the third measurement result information C23 appearing in the third area A3 does not indicate the distance between the sensor unit 6 and the content C, and is not suitable for estimating the remaining amount Ra (specific value) of the content C. Therefore, the measured distance ds (measured distance ds included in the third area A3) indicated by the third measurement result information C23 is not used to estimate the remaining amount Ra (specific value) of the content C. Note that it is also conceivable that the third measurement result information C23 cannot be output due to the sensitivity characteristics such as the ranging limit distance of the sensor unit 6 (sensor IC), the size of the container T, the relative permittivity εr of the content C, and the like, but the third measurement result information C23 is not used to estimate the remaining amount Ra of the content C, so there is no effect on the accuracy of the estimation of the remaining amount Ra of the content C.

### [Storage Unit]

The storage unit 7 shown in FIGS. 4 and 5 is constituted by a nonvolatile semiconductor memory and the like. The storage unit 7 is configured to be able to store container-specific information C3 based on the specification of the container T to which the remaining amount estimation device 100 is attached, and estimation-related information C4 relating to estimation of the remaining amount Ra of the content C stored in the container T. The storage unit 7 also stores information indicating the first threshold d1, the second threshold d2, the first tolerance range R1, and the second tolerance range R2.

### [Container-specific Information]

The container-specific information C3 is information relating to the specification (size) specific to the container T. The container-specific information C3 includes information indicating the bottom face distance dt between the sensor unit 6 fixed to the lid T3 and the bottom face T11 of the container T. In the present embodiment, the container-specific information C3 is obtained by the sensor unit 6 attached to the lid T3 performing measurement when the content C is not contained in the container T (that is, the remaining amount Ra of the content C is zero). However, the container-specific information C3 may be set based on the specification (catalog value) of the container T, or may be set to a value obtained from actual measurement using a measure or the like.

### [Estimation-related Information]

The estimation-related information C4 is information indicating the relationship between the measurement result information C2 output from the sensor unit 6 and the remaining amount Ra of the content C (see FIG. 7). FIG. 7 is a graph showing an example of the relationship between the depth dc of the content C and the remaining amount Ra of the content C, with the horizontal axis shown in FIG. 7 indicating the depth dc of the content C, and the vertical axis indicating the remaining amount Ra of the content C. Note that the depth dc of the content C indicates the actual distance between the boundary surface F of the content C (on the sensor unit 6 side (upper side Z2) shown in FIG. 3) and the bottom face T11 of the container T.

### [Remaining Amount Estimation Unit]

The remaining amount estimation unit 8 includes a processor such as a central processing unit (CPU). The remaining amount estimation unit 8 estimates the remaining amount Ra of the content C based on the measurement result information C2 output from the sensor unit 6 and the information (the container-specific information C3 and the estimation-related information C4) stored in the storage unit 7.

In the present embodiment, the remaining amount estimation unit 8 estimates the remaining amount Ra of the content C by using the fact that the propagation speed of radio waves changes (the ranging amount changes) due to the above-described relative permittivity εr of the content C. In detail, as described above, using the fact that the measured distance ds output by the sensor unit 6 that receives reflected waves reflected on the bottom face T11 of the container T is greater than the actual bottom face distance dt (the actual distance between the sensor unit 6 and the bottom face T11), the remaining amount Ra of the content C is estimated.

Specifically, the remaining amount estimation unit 8 estimates the remaining amount Ra without using, of the measured distance ds output by the sensor unit 6, measured distances ds included in the first area A1 (measured distances ds less than or equal to the upper limit of the first tolerance range R1), as shown in FIGS. 6A to 6C. In the present embodiment, the remaining amount estimation unit 8 estimates the remaining amount Ra of the content C by determining whether or not the measured distance ds is included in the second area A2 (the area starting after the upper limit of the first tolerance range R1 and extending up to the upper limit of the second tolerance range R2). Note that the remaining amount estimation unit 8 may determine that the remaining amount Ra of the content C is the full amount if the measured distance ds indicated by the measurement result information C2 (second measurement result information C22) is within the first tolerance range R1.

If it is determined that the measured distance ds is not included in the second area A2, the remaining amount estimation unit 8 determines whether or not the measured distance ds is greater than the upper limit of the second tolerance range R2, and if it is determined that the measured distance ds is greater than the upper limit of the second tolerance range R2, the remaining amount estimation unit 8 estimates that the remaining amount Ra of the content C is the full amount.

If it is determined that the measured distance ds output by the sensor unit 6 is included in the second area A2 (the measured distance ds is greater than the upper limit of the first tolerance range R1 and is less than or equal to the upper limit of the second tolerance range R2), the remaining amount estimation unit 8 determines whether or not the measured distance ds is included in the second tolerance range R2 (the measured distance ds is greater than or equal to the lower limit of the second tolerance range R2 and is less than or equal to the upper limit thereof). If it is determined that the measured distance ds is included in the second tolerance range R2 (that is, the measured distance ds has a value close to the distance between the sensor unit 6 and the bottom face T11), the remaining amount estimation unit 8 estimates that the remaining amount Ra of the content C is "0" (that is, the container T is empty). On the other hand, if it is determined that the measured distance ds is not included in the second tolerance range R2 (that is, the measured distance ds has a value far from the distance between the sensor unit 6 and the bottom face T11), the remaining amount estimation unit 8 calculates and obtains the remaining amount Ra of the content C based on the measured distance ds.

### [Calculation of Remaining Amount]

If the remaining amount Ra of the content C is the full amount, the remaining amount estimation unit 8 calculates remaining amount result information C5 (an example of result information) indicating a value preset as the remaining amount Ra (amount of the content C when the container T is estimated to be full) based on the estimation source information C1, and outputs the calculated remaining amount result information C5. If the remaining amount Ra of the content C is zero, the remaining amount estimation unit 8 outputs the remaining amount result information C5 indicating "0". In addition, if the remaining amount Ra of the content C is neither the full amount nor zero, the remaining amount estimation unit 8 calculates the remaining amount Ra of the content C, and outputs the remaining amount result information C5 indicating the calculated result. Note that, in the following, the processing for calculating the remaining amount Ra may also be referred to as "remaining amount estimation processing".

### [Communication Unit]

The communication unit 9 is capable of transmitting and receiving data indicating the remaining amount result information C5 output from the remaining amount estimation unit 8. The communication unit 9 includes an antenna (not shown). The antenna can be, for example, an antenna member mounted on the substrate 3, a pattern antenna formed on the surface of the substrate 3, or an antenna built in the communication IC mounted on the substrate 3, and may be connected to an antenna member arranged within the housing space 1S via a communication wire or the like.

The communication unit 9 includes a first communication unit 91 (an example of a first communication device) and a second communication unit 92 (an example of a second communication device), which have different communication distances (communication standards). Note that the container-specific information C3 to be stored in the storage unit 7 can be input to the storage unit 7 of the remaining amount estimation device 100 via the first communication unit 91 or the second communication unit 92.

The first communication unit 91 is capable of communicating in accordance with long-range wireless standards. The first communication unit 91 consists of a communication device that complies with long-range wireless standards. In the present embodiment, the first communication unit 91 consists of a communication device that complies with the Low Power Wide Area (LPWA). Note that the first communication unit 91 may be a communication device that complies with 5G, LTE, and the like.

The first communication unit 91 is configured to be able to transmit the remaining amount result information C5 estimated by the remaining amount estimation unit 8 to the first external device 201 described with reference to FIG. 1. In other words, the first external device 201 is configured to be able to receive the remaining amount result information C5 output from the remaining amount estimation unit 8. The first external device 201 includes a first external communication unit (not shown) capable of communicating in accordance with the same communication standard as that of the first communication unit 91, and can communicate with the first communication unit 91 in accordance with long-range wireless standards. With this, it is possible to remotely monitor the remaining amount Ra of the container T output from the remaining amount estimation device 100. By monitoring the remaining amount Ra, the container T can be replenished with the content C at an appropriate timing by a replenishment service system for the content C.

The second communication unit 92 is capable of communicating in accordance with short-range wireless standards. The second communication unit 92 consists of a communication device that complies with short-range wireless standards. In the present embodiment, the second communication unit 92 consists of a communication device that complies with the Bluetooth Low Energy (BLE). Note that the second communication unit 92 may be a device that complies with Bluetooth (registered trademark) other than BLE, WiFi, Private LoRa, Z-Wave, ZigBee (registered trademark), Thread, Matter, or the like.

The second communication unit 92 receives control data for the remaining amount estimation device 100 (control unit 5) from the second external device 202 described with reference to FIG. 1. In other words, the second external device 202 is configured to be able to transmit the control data for the remaining amount estimation device 100. The second external device 202 includes a second external communication unit (not shown) capable of communicating in accordance with the same communication standard as that of the second communication unit 92, and can communicate with the second communication unit 92 in accordance with short-range wireless standards (can perform P to P wireless communication with the remaining amount estimation device 100).

In the above-described embodiment, the sensor unit 6 has been described as a millimeter-wave sensor for distance measurement, but the sensor unit 6 is not limited to a millimeter-wave sensor for distance measurement, and may be, for example, a magnetic sensor that detects changes in the magnetic field. Magnetic sensors include Hall sensors that detect magnetic fields in a non-contact manner using Hall effects, MR sensors that detect magnetic fields in a non-contact manner using magnetic resistance effects, MI sensors that detect magnetic fields in a non-contact manner using magnetic impedance effects, and other sensors. The sensing method when the sensor unit 6 is a magnetic sensor is not particularly limited. If the sensor unit 6 is a magnetic sensor, the sensor module may serve as a current sensor module and be used in a current monitoring system that detects and monitors current values in a non-contact manner, or may serve as a metering sensor module and be used in an instrument monitoring system that detects and monitors, in a non-contact manner, indicator values of an instrument such as a pressure gauge. The sensor unit 6 may also be a capacitive sensor, an acceleration sensor, an ultrasonic sensor, a gyro sensor, a light sensor, an image sensor, a camera that uses an image sensor, or the like, and the sensor unit 6 can output information about the content C in a non-contact manner and can be used for systems for monitoring the condition of a device to which the sensor module is attached based on the output information.

### [Effects of Embodiment]

The remaining amount estimation device 100 having the above-described configurations has the following effects.
(1) Data communication can be carried out by selecting a communication device (the first communication unit 91 or the second communication unit 92) according to the usage of data to be communicated (communication purpose). Furthermore, since there are multiple communication devices (communication means), even if one of the two communication devices (communication means) fails or in other cases, communication is possible with the other communication device (communication means), making it possible to suppress deterioration in convenience.
(2) The output information (remaining amount Ra of the content C) from the sensor unit 6 can be remotely monitored. By using the LPWA as a communication standard that complies with a long-range wireless communication, it is possible to reduce power consumption. With this, for example, if the battery unit 42 is the primary battery, the battery replacement interval can be extended.
(3) For example, a user can visually check, from among multiple devices (remaining amount estimation devices 100), the remaining amount estimation device 100 that is to be subjected to maintenance (device to which control data is to be communicated) (while checking operation thereof), and perform communication (transmission of the control data) with the desired remaining amount estimation device 100. Therefore, for example, in a location where the remaining amount estimation device 100 is installed, the user can perform maintenance work (for example, update of firmware), while checking the operation of the remaining amount estimation device 100. In addition, the user can perform maintenance work without disassembling the remaining amount estimation device 100. Furthermore, since the remaining amount estimation device 100 and the second external device 202 can communicate with each other without through a communication line (can perform P to P wireless communication), even if the communication line provided by the communication service provider or the like fails, communication with the remaining amount estimation device 100 (transmission of control data) is possible without being affected by the failure in the communication line. Due to the short-range communication, the time required for communication is also short and it is difficult for delays in communication to occur, making it possible to also increase the immediacy of control on the remaining amount estimation device 100 (transmission of the control data). In addition, due to the short-range communication, it is possible to simplify the individual identification, which can omit a complex encryption method and multi-factor authentication, thereby increasing the immediacy.
   In addition, as the immediacy increases, it is possible to simplify the inspection method in the inspection process during production. Specifically, after turning on the remaining amount estimation device 100 in the final finished product state and verifying its operation, the remaining amount estimation device 100 can be shipped with its power off. With this, after the shipment, the remaining amount estimation device 100 can be attached to the container T at the site of use and turned on, so it is possible to suppress the battery from being consumed during the period from the shipment to the actual use.
(4) According to the above-described embodiment, a general-purpose sensor (ToF type level sensor) can be used to configure the sensor unit 6. For example, the sensor unit 6 can be incorporated into a water amount monitoring system that can monitor the water surface level of a river.
(5) According to the above-described embodiment, the sensor unit 6 uses millimeter waves that are different from the frequency bands used for communication of the first communication unit 91 and the second communication unit 92, and can therefore suppress the effects such as the interference with the communications of the first communication unit 91 and the second communication unit 92. In addition, millimeter waves can pass through resin, so even if the sensor unit 6 is placed on the lid T3 of the container T made of an insulating material, the distance to the content C can be measured. For example, material and processing costs can be reduced compared to cases where an optical sensor that requires a lid configured to allow light to pass through is used as the sensor unit 6. Alternatively, if the lid cannot be configured to allow light to pass through, the remaining amount estimation device 100 will need to be sized (downsized) in such a manner as to pass through the opening T2 of the container T, but a millimeter-wave sensor will eliminate the need for such downsizing.
(6) According to the above-described embodiment, the interference with the communication of the first communication unit 91 and the second communication unit 92 can be avoided. In addition, the sensor unit 6 can be configured using a general-purpose device as a magnetic sensor such as a Hall sensor, MR sensor, or MI sensor. In addition, the remaining amount estimation device 100 can be used as a current sensor module or a metering sensor module.
(7) According to the above-described embodiment, the result information C5 calculated based on the estimation source information C1 can be output.
(8) According to the above-described embodiment, the remaining amount estimation device 100 can be used at places such as outdoor places where water resistance is required.

In addition, the casing 1 no longer needs to be disassembled, and maintenance work (such as firmware update operation) can be performed on the internal electronic components (for example, the sensor unit 6, communication unit 9, and the like), while keeping the casing 1 watertight (sealed).

According to the above-described embodiment, the estimation source information C1 or the result information C5 can be transmitted to the first external device 201.

According to the above-described embodiment, the estimated results of the remaining amount Ra of the content C contained in the container T can be transmitted as the estimation source information C1 or the remaining amount result information C5.

### [Other Embodiments]

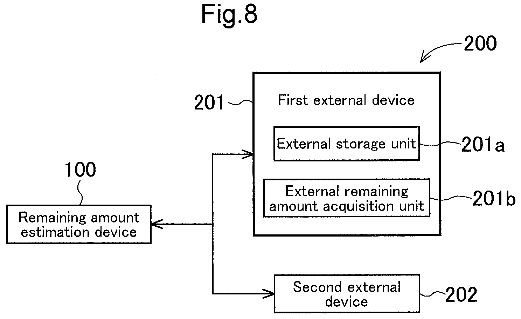

(1) In the above-described embodiment, the remaining amount estimation device 100 includes the control unit 5, the storage unit 7, the remaining amount estimation unit 8, and the communication unit 9, but the storage unit 7 and the remaining amount estimation unit 8 may be included in a device different from the remaining amount estimation device 100 (for example, as shown in FIG. 8, a first external device 201 of the devices included in the remaining amount estimation system that is different from the remaining amount estimation device 100). The first external device 201 may include an external storage unit 201a capable of storing the container-specific information C3 and an external remaining amount estimation unit 201b capable of estimating the remaining amount Ra. Note that the storage unit 7 and the remaining amount estimation unit 8 may be provided in each of the remaining amount estimation device 100 and the first external device 201. In other words, the casing 1 of the remaining amount estimation device 100 need only house at least the lens unit 2, the substrate 3, the sensor unit 6, and the communication unit 9, and the power supply unit 4, the control unit 5, the storage unit 7, and the remaining amount estimation unit 8 may be housed in a casing different from the casing 1. This can simplify the configuration of the remaining amount estimation device 100. As a result, the cost required for the remaining amount estimation device 100 can be reduced.
(2) The above-described embodiment has described a configuration where the casing 1 is a single member, but the casing 1 may consist of multiple divisions into which the casing 1 is divided. In addition, the number of substrates 3 is not limited to one, and multiple substrates 3 may be included.
(3) The above-described embodiment has described a configuration where the housing space 1S is constructed to be watertight by applying a sealing material such as adhesives or grease to the gap between the lid T3 and the casing 1, but the configuration of the watertight housing space 1S is not particularly limited. The housing space 1S may be made watertight, for example, by placing an O-ring between the lid T3 and the casing 1. Alternatively, the housing space 1S may be made watertight, by subjecting the lid T3 and the casing 1 to ultrasonic welding. Also, a member that allows gas to pass through and does not allow liquid to pass through may be used as part of the lid T3. The casing 1 may also have a dust prevention function or an explosion protection function. In other words, by injecting a sealing material such as a potting material, the casing 1 may be configured to have a waterproof function, a dust prevention function, an explosion protection function, or other functions.
(4) A water-resistant connector (not shown) may be assembled to the casing 1 described in the above-described embodiment. This allows an antenna to be connected to the connector and placed outside the casing 1. Alternatively, the battery unit 42 can be connected to the connector and placed outside the casing 1. With this, components with a large volume can be placed outside the casing 1. In other words, by assembling such a water-resistant connector to the casing 1, the remaining amount estimation device 100 can be downsized while maintaining the water tightness of the housing space 1S of the casing 1.
(5) The above-described embodiment has described a configuration where the content C is kerosene, but the content C is not limited to kerosene and may be a material whose relative permittivity εr is greater than or equal to "substantially 1" of the relative permittivity εr of air (preferably, "2" or more), and that can be contained in the container T, such as an organic substance (organic solvent), for example. In addition, the content C is not limited to liquid, but may be solid, or a mixture of liquid and solid. However, it is preferable that the content C does not contain air. Note that the container T is changed as appropriate depending on the content C to be contained.
(6) In the above-described embodiment, the first tolerance range R1 is set in a manner as to cross the first division line L1, but the first tolerance range R1 does not need to be set in a manner as to cross the first division line L1 (only on either the upper side Z2 (sensor unit 6 side) or the lower side Z1 (bottom face T11 side)). The same applies to the second tolerance range R2.
(7) In the above-described embodiment, the first tolerance range R1 is set for the first division line L1, but the first tolerance range R1 does not need to be set. The same applies to the second tolerance range R2.

### Industrial Applicability

The present disclosure is applicable to a sensor device system that can optimize the frequency and time of maintenance, replenishment, and the like of a measurement target material by automatically detecting and remotely monitoring the condition of the measurement target material.

### Reference Signs List

- 1: : Casing
- 1S: : Housing space
- 4: : Power supply unit
- 5: : Control unit
- 6: : Sensor unit
- 8: : Remaining amount estimation unit (calculation unit)
- 9: : Communication unit
- 91: : First communication unit (first communication device)
- 92: : Second communication unit (second communication device)
- 200: : Remaining amount estimation system (sensor device system)
- C: : Content
- C1: : Estimation source information (output information)
- C5: : Remaining amount result information (result information)
- T: : Container

## Claims

1. A sensor device system comprising:
a sensor unit;
a first communication device configured to transmit output information output from the sensor unit or result information based on the output information, and communicate in accordance with a first communication standard;
a second communication device configured to communicate in accordance with a second communication standard different from the first communication standard; and
a control unit configured to control operations of the sensor unit, the first communication device, and the second communication device,
wherein the second communication device is configured to receive control data for the control unit.

2. . The sensor device system according to claim 1,
wherein the first communication device communicates using a communication standard enabling a long-range wireless communication as the first communication standard.

3. . The sensor device system according to claim 1 or 2,
wherein the second communication device communicates using a communication standard enabling a short-range wireless communication as the second communication standard.

4. . The sensor device system according to claim 1 or 2,
wherein the sensor unit measures a distance to content contained in a container by measuring time until transmitted radio waves are reflected on the content and are received, and outputs the measured distance as the result information.

5. . The sensor device system according to claim 4,
wherein the sensor unit transmits millimeter wave sensor as the radio waves.

6. . The sensor device system according to claim 3,
wherein the sensor unit includes a magnetic sensor configured to detect a change in magnetic field and sense a state of a measurement target material.

7. . The sensor device system according to claim 1 or 2, comprising:
a calculation unit configured to calculate the result information based on the output information.

8. . The sensor device system according to claim 7, further comprising:
a power supply unit configured to supply power to the sensor unit, the calculation unit, the control unit, the first communication device, and the second communication device; and
a casing including a housing space in which the sensor unit, the calculation unit, the control unit, the first communication device, the second communication device, and the power supply unit are housed,
wherein the housing space is watertight.

9. . The sensor device system according to claim 1, further comprising:
a first external device configured to receive the output information or the result information via the first communication device.

10. . The sensor device system according to claim 1,
wherein the sensor unit is configured to output estimation source information required to estimate a remaining amount of content contained in a container.
